# EUROPÄISCHE PATENTSCHRIFT

(11) **EP 0 515 857 B1**
(45) Veröffentlichungstag und Bekanntmachung des Hinweises auf die Patenterteilung: **04.10.1995**
(21) Anmeldenummer: 92107266.6
(22) Anmeldetag: 29.04.1992
(51) Int. Cl.: B01D 53/94, B01D 53/30

(54) **Verfahren zur selektiven katalytischen Reduktion von Abgasen aus Kraftfahrzeugdieselmotoren**
Process for selective catalytic reduction of exhaust gases from Diesel engines
Procédé pour la réduction catalytique sélective des gaz d'échappement des moteurs Diesel

(30) Priorität: 25.05.1991 DE 4117143
(43) Veröffentlichungstag der Anmeldung: 02.12.1992
(73) Patentinhaber: BASF Aktiengesellschaft, 67063 Ludwigshafen (DE); MERCEDES-BENZ AG, 70327 Stuttgart (DE)
(72) Erfinder: Agar, David, Dr., W-6149 Rimbach (DE); Broecker, Franz Josef, Dr., W-6700 Ludwigshafen (DE); Koechel, Oliver, W-6719 Bubenheim (DE); Morsbach, Bernd, W-6700 Ludwigshafen (DE); Ruppel, Wilhelm, Dr., W-6700 Ludwigshafen (DE); Wuensch, Martin, Dr., W-6702 Bad Duerkheim (DE); Daudel, Helmut, W-7060 Schorndorf (DE); Gaertner, Uwe, W-7056 Weinstadt (DE)

(56) Entgegenhaltungen:
- EP-A- 0 232 452
- EP-A- 0 328 777
- WO-A-83/00057
- FR-A- 2 414 949

## Beschreibung

Die Erfindung betrifft ein Verfahren zur selektiven katalytischen Reduktion von Stickoxiden in Abgasen aus Kraftfahrzeugdieselmotoren unter getakteter Zugabe von NH₃ oder NH₃-freisetzenden Stoffen.

Die Stickoxidemissionen in den modernen Industriestaaten werden durch die Emittenten, Verkehr, fossil befeuerte Kraftwerke und Industrieanlagen bestimmt. Während die Kraftwerks- und Industrieemissionen durch den Bau entsprechender Abgasreinigungsanlagen zurückgehen, tritt der Anteil des Verkehrs immer mehr in den Vordergrund.

Bei Otto-Motoren können die Stickoxide auf bekannte Weise durch einen Drei-Wege-Katalysator bei stöchiometrischer Fahrweise reduziert werden, wobei die unverbrannten bzw. teiloxidierten Komponenten des Abgases als Reduktionsmittel für die gebildeten Stickoxide idealerweise im stöchiometrischen Verhältnis zur Verfügung stehen.

Beim gemischgeregelten Dieselmotor ist diese Art der Stickoxidminderung prinzipbedingt durch die unterstöchiometrische Fahrweise nicht möglich. Andererseits haben die Stickoxidemissionen aus Dieselmotoren, insbesondere aus den im Nutzfahrzeugbereich dominierenden verbrauchsgünstigen Direkteinspritzern einen hohen Anteil an den Gesamtemissionen.

Aus der DE-A-24 58 888 ist ein Katalysator bekannt, mit dem Stickoxide unter Zusatz von NH₃ als Reduktionsmittel selektiv zu Stickstoff und Wasser umgesetzt werden. Dieser Katalysator wird in großem Umfang bei der Stickoxidminderung von Kraftwerksabgasen eingesetzt, wobei dem Rauchgas, bezogen auf den gewünschten Umsatz, NH₃ im stöchiometrischen Verhältnis kontinuierlich zugegeben wird. Zur Regelung der NH₃-Dosierung ist bei diesem Verfahren eine Messung der NOx-Eintritts- und Austrittskonzentration neben der Bestimmung der Rauchgasmenge erforderlich. Diese Regelung hat sich zwar bei dem im Kraftwerksbereich auftretenden langsamen Abgasmengen- und NOx-Konzentrationsänderungen als vorteilhaft erwiesen; sie ist jedoch für die außerordentlich starken und schnellen Mengen- und Konzentrationsänderungen wie sie im Betrieb eines Nutzfahrzeugdieselmotors auftreten, aufgrund der großen Zeitkonstanten der Regelung ungeeignet.

Aus der DE-A-37 44 388 ist die adsorptive Beladung eines Katalysators durch eine überstöchiometrische NH₃-Zugabe bekannt. Dabei reagiert in einer sich an die Beladung anschließenden Arbeitsphase das adsorbierte NH₃ mit dem NOx des zu behandelnden Gases. Bei dieser Betriebsweise sind aufgrund der Vorbeladung des Katalysators mit NH₃ starke Schwankungen von Abgasmenge und NOx-Konzentration kein Problem. Nachteil dieses Verfahrens ist jedoch, daß die Durchströmungsrichtung durch den Katalysator periodisch umgekehrt werden muß, um einen definierten Beladungszustand des Katalysators zu erhalten.

Diesen Nachteil umgeht eine Regelung der NH₃-Dosierung wie sie in der DE-A-38 25 206 beschrieben ist. Diese Regelung sieht eine getaktete überstöchiometrische Zudosierung des Reduktionsmittels NH₃ ohne Strömungsumkehr vor; sie kann jedoch nicht auf NOx-Konzentrationsmessungen vor und hinter dem Katalysator verzichten, da der Beladungszustand des Katalysators bei dieser Betriebsweise nicht definiert ist, ein Mangel, der durch aufwendige Messungen der NOx-Konzentrationen ausgeglichen werden muß.

Weiterhin ist es aus der EP-A-0 232 452 bekannt, zum Abscheiden von Stickstoffoxiden aus Rauchgasen dem Rauchgasstrom in einem Aktivkoksbett NH₃ diskontinuierlich in periodischen Intervallen zuzudosieren. Dabei werden die Länge der NH₃-Zugabeintervalle und die NH₃-Mengenvariationen nach der Sollwert des NOx-Abscheidegrades und nach der im hinteren Teil des Aktivkoksbettes gemessenem NH₃-Konzentration geregelt.

Mit der Erfindung soll die Stickoxidemission von Kraftfahrzeugdieselmotoren gemindert werden.

Diese Aufgabe wird dadurch gelöst, daß die getaktete überstöchiometrische NH₃-Zugabe in der Weise gesteuert wird, daß die Zugabe nach ihrem Start erst dann wieder unterbrochen wird, wenn an einer Stelle in der ersten Hälfte des Katalysators eine hohe NH₃-Beladungskonzentration, die als Schwellenwert festgelegt ist, in der Gasphase erreicht ist und erst dann erneut einsetzt, wenn das im Katalysator gespeicherte NH₃ weitgehend durch die Reaktion aufgebraucht ist, wobei dieser Zeitpunkt durch näherungsweise Berechnung des über die Periode seit Dosierungsbeginn oder auch Dosierungsende vom Motor produzierten NOx aus Motorkennfeld und Betriebszeit und unter Berücksichtigung des durchschnittlichen Abscheidegrades bestimmt wird.

Zweckmäßige Weiterbildungen des Verfahrens nach der Erfindung sind Gegenstand der Unteransprüche 2 bis 7.

Bei dem erfindungsgemäßen Verfahren wird der Katalysator in einer Beladungsphase mit NH₃ beladen. Durch diese Beladung bildet sich im Katalysator eine relativ steile NH₃-Adsorptionsfront aus. Das Fortschreiten dieser Adsorptionsfront im Katalysator wird durch einen an einer Stelle im vorderen Bereich des Katalysators angeordneten Sensor in der Weise festgestellt, daß die mit der Adsorptionsfront auftretende hohe NH₃-Konzentration in der Gasphase erfaßt wird. Dabei kann der Sensor direkt in einem Wabenkanal des Katalysators bzw. zwischen zwei Katalysatorelementen plaziert werden, oder es kann an der vorgesehenen Stelle im Katalysator ein kleiner Teilgasstrom entnommen und einem außenliegenden Sensor zugeführt werden. Die Stelle, an der der Sensor angebracht wird, ist vorzugsweise so zu wählen, daß bei Auftreten einer der Ansprechschwelle des Sensors entsprechenden NH₃-Konzentration in der Gasphase, die NH₃-Konzentration im dahinterliegenden Teil des Katalysators durch Adsorption und Reaktion so abgesenkt wird, daß am Austritt des Katalysators keine unzulässigen NH₃-Restkonzentration auftreten.

Diese Stelle kann durch einfache Versuche oder reaktionskinetische Betrachtungen im einzelnen Anwendungsfall ermittelt werden. Nach Feststellung der vorgegebenen NH₃-Konzentration durch den Sensor wird die NH₃-Zufuhr unterbrochen. Die dem Katalysator in der Gesamtperiode, d.h. in der Beladephase und der sich anschließenden Abreaktionsphase vom Dieselmotor zugeführte NOx-Menge läßt sich aus den Motorbetriebsdaten Drehzahl und Regelstangenweg der Einspritzpumpe oder aus anderen Betriebsparametern unter Zuhilfenahme des bekannten Motorkennfeldes über die Zeit näherungsweise aufsummieren.

Wenn diese NOx-Menge in etwa diejenige Menge erreicht, die stö-chiometrisch der über die Beladephase zudosierten NH₃-Menge entspricht, ist der Gesamtzyklus beendet und es beginnt ein neuer Zyklus mit der Beladephase wie oben beschrieben.

In Betriebspunkten mit höheren Abgastemperaturen kann es je nach Anwendungsfall erforderlich werden, von der beschriebenen Fahrweise abzugehen, da die NH₃-Adsorptionsfähigkeit des Katalysators mit steigender Temperatur abnimmt. In diesen recht seltenen Betriebsphasen, die im allgemeinen bei konstantem Vollastbetrieb auftreten, kann NH₃ entsprechend der NOx-Produktion des Motors stöchiometrisch zudosiert werden, da einerseits die Schwankungen der Betriebsparameter nicht so ausgeprägt sind und andererseits evtl. überschüssiges NH₃ vom Katalysator bei den vorliegenden hohen Temperaturen oxidiert wird und somit nicht zu unzulässigen NH₃-Emissionen führt.

Für das erfindungsgemäße Verfahren kommen Sensoren in Betracht, die NH₃-Konzentrationen in Höhe von 400 bis 4000 ppm, vorzugsweise 1000 bis 2000 ppm feststellen. Die sensoren stehen mit einem Schalter in Verbindung und lösen bei Erreichen eines einstellbaren Schwellenwertes für einen NH₃-Gehalt einen Schaltimpuls aus.

Das Wirkungsprinzip der Sensoren beruht auf der Erfassung der positiven Wärmetönung der katalytischen Oxidation des NH₃. Das Abgas wird dazu über einen entsprechenden Meßkatalysator geleitet und die aus der Reaktionswärme resultierende Differenz der Gastemperaturen vor und hinter dem Meßkatalysator, die dem NH₃-Gehalt proportional ist, erfaßt. In einer speziellen Ausführungsform wird ein Teilgasstrom, aus dem Prozeß der Abgasentstickung entnommen, auf eine Temperatur zwischen 200 und 800°C, vorzugsweise zwischen 350 und 600°C, thermostatisiert und axial über eine spiralförmig gewickelte katalytisch beschichtete Metallfolie geleitet, die den Meßkatalysator bildet. Vorzugsweise besteh die katalytische Beschichtung aus Edelmetallen, insbesondere Platin.

Nach einem weiteren Merkmal der Erfindung wird zu dem oben beschriebenen Sensor ein zweiter Sensor der beschriebenen Art in der Weise eingesetzt, daß er mit Abgas vor oder hinter der NH₃-Zugabe beaufschlagt wird. Als Signal wird in diesem Fall das Ansteigen bzw. das Abfallen der Differenz der an den beiden Sensoren gemessenen Temperaturdifferenzen verwendet. Auf diese Weise läßt sich der Störeinfluß, der durch die Oxidation von in Abgas enthaltenen Kohlenwasserstoffen und Kohlenmonoxid an dem Meßkatalysator bedingt ist, eliminieren.

Das erfindungsgemäße Verfahren wird an folgendem Beispiel erläutert:
Ein Katalysator wurde mit einen Gasgemisch aus ca. 85 % N₂, 5 % O₂ und 10 % H₂O bei verschiedenen Temperaturen beaufschlagt. Das Gasgemisch enthielt eine Beimischung von 1000 ppm NO. Nach dem ersten Drittel des Katalysators wurde ein Teilgasstrom entnommen und über einen Sensor geleitet. Zum Zeitpunkt O wurde dem Gasgemisch NH₃ überstöchiometrisch zudosiert. Nach 2 Minuten stellte sich an dem Sensor eine Temperaturdifferenz ein, worauf die NH₃-Dosierung unterbrochen wurde. Nach 7 Minuten war das zudosierte NH₃ weitgehend abreagiert, was sich auch an einem Anstieg des NO-Gehaltes hinter dem Katalysator zeigte. Zu diesem Zeitpunkt wurde die NH₃-Dosierung wieder aufgenommen und der Vorgang wiederholt. Nach wenigen Zyklen stellten sich konstante Verhältnisse in bezug auf die Dauer der NH₃-Zugabe und Abreaktionsphase ein. Dieses vereinfachte Beispiel zeigt die grundsätzliche Durchführbarkeit des Verfahrens.

## Patentansprüche

1. Verfahren zur selektiven katalytischen Reduktion von Stickoxiden in Abgasen aus Kraftfahrzeugdieselmotoren unter getakteter Zugabe von NH₃ oder NH₃-freisetzenden Stoffen, dadurch gekennzeichnet, daß die getaktete überstöchiometrische NH₃-Zugabe in der Weise gesteuert wird, daß die Zugabe nach ihrem Start erst dann wieder unterbrochen wird, wenn an einer Stelle in der ersten Hälfte des Katalysators eine hohe NH₃-Beladungskonzentration, die als Schwellenwert festgelegt ist, in der Gasphase erreicht ist und erst dann erneut einsetzt, wenn das im Katalysator gespeicherte NH₃ weitgehend durch die Reaktion aufgebraucht ist, wobei dieser Zeitpunkt durch näherungsweise Berechnung des über die Periode seit Dosierungsbeginn oder auch Dosierungsende vom Motor produzierten NOx aus Motorkennfeld und Betriebszeit und unter Berücksichtigung des durchschnittlichen Abscheidegrades bestimmt wird.

2. Verfahren nach Anspruch 1, dadurch geKennzeichnet, daß die Höhe der NH₃-Zugabe so gewählt wird, daß sie zumindest annähernd der NH₃-Menge entspricht, die im Motorbetriebspunkt mit der maximalen NOx-Produktion zur gewünschten Reduktion der Stickoxide benötigt wird.

3. Verfahren nach Anspruch 1 und 2, dadurch gekennzeichnet, daß die Bestimmung des NH₃-Gehaltes durch einen Sensor erfolgt und der Sensor bei Erreichen des Schwellenwertes einen Schaltimpuls auslöst.

4. Verfahren nach Anspruch 1 bis 3, dadurch gekennzeichnet, daß der Schaltimpuls durch den Sensor aufgrund einer Differenztemperatur im Gasstrom des Katalysators ausgelöst wird, wobei die entsprechenden Temperaturmessungen vor und nach einer katalytischen Oxidation des im Gasstrom enthaltenen NH₃ erfolgen.

5. Verfahren nach Anspruch 4, dadurch gekennzeichnet, daß die Temperaturmessungen und die katalytische Oxidation des NH₃ in einem Teilgasstrom außerhalb des Katalysators erfolgen.

6. Verfahren nach einem oder mehreren der vorstehenden Ansprüche 1 bis 5, dadurch gekennzeichnet, daß für die Bestimmung des NH₃-Gehaltes zwei parallele Sensoren eingesetzt werden, von denen der erste Sensor nach Anspruch 3 bis 5 betrieben wird und der zweite Sensor mit Abgas beaufschlagt wird, das vor der NH₃-Zugabe entnommen wird.

7. Verfahren nach Anspruch 6, dadurch gekennzeichnet, daß der zweite Sensor mit Abgas beaufschlagt wird, welches nach erfolgter NH₃-Zugabe vor dem Katalysator entnommen wird.

## Claims

1. A process for the selective catalytic reduction of oxides of nitrogen in waste gases from vehicle diesel engines with synchronized addition of NH₃ or NH₃-donating substances, wherein the synchronized superstoichiometric NH₃ addition is controlled in a manner such that, after its start, the addition is interrupted only when a high NH₃ loading concentration which is defined as the threshold value is reached in the gas phase at a point in the first half of the catalyst and starts again only when the NH₃ stored in the catalyst has been substantially consumed by the reaction, this point in time being determined by approximately calculating the NOₓ produced by the engine over the period since the beginning of metering or the end of metering, from engine characteristics and operating time, and taking into account the average degree of separation.

2. A process as claimed in claim 1, wherein the level of the NH₃ addition is chosen so that it corresponds at least approximately to the amount of NH₃ which is required for the desired reduction of the oxides of nitrogen at the engine operating point with the maximum NOₓ production.

3. A process as claimed in claims 1 and 2, wherein the NH₃ content is determined by a sensor, and the sensor triggers a switching signal when the threshold value is reached.

4. A process as claimed in any of claims 1 to 3, wherein the switching signal is triggered by the sensor on the basis of a temperature difference in the gas stream of the catalyst, the corresponding temperature measurements being carried out before and after catalytic oxidation of the NH₃ contained in the gas stream.

5. A process as claimed in claim 4, wherein the temperature measurements and the catalytic oxidation of the NH₃ are carried out in a bleed stream of the gas outside the catalyst.

6. A process as claimed in one or more of the preceding claims 1 to 5, wherein the determination of the NH₃ content is carried out using two parallel sensors, the first of which is operated as claimed in any of claims 3 to 5 and the second of which is brought into contact with exhaust gas which is withdrawn before the addition of NH₃.

7. A process as claimed in claim 6, wherein the second sensor is brought into contact with exhaust gas which is withdrawn after NH₃ addition before the catalyst.

## Revendications

1. Procédé de la réduction catalytique sélective d'oxydes d'azote dans des gaz d'échappement de moteurs diesel de véhicules automobiles par apport cadencé de NH₃ ou de matières dégageant NH₃, caractérisé par le fait que l'apport de NH₃ surstoechiométrique cadencé est commandé de manière que l'apport après son début ne soit alors encore interrompu que lorsque, en un point de la première moitié du catalyseur, est atteinte dans la phase gazeuse une concentration de charge de NH₃ élevée, qui est fixée comme valeur de seuil, et ne soit alors à nouveau repris que lorsque le NH₃ stocké dans le catalyseur est largement consommé par la réaction, ce moment étant déterminé par calcul approximatif du NOx, résultant du champ caractéristique du moteur et du temps de marche, produit par le moteur sur la période depuis le début de dosage ou bien la fin du dosage, et en tenant compte du degré de dépôt moyen.

2. Procédé selon la revendication 1, caractérisé par le fait que le niveau d'apport de NH₃ est choisi tel qu'il correspond au moins approximativement à la quantité de NH₃ qui est nécessaire, au point de fonctionnement du moteur, avec la production de NOx maximale, pour la réduction souhaitée de l'oxyde d'azote.

3. Procédé selon les revendications 1 et 2, caractérisé par le fait que la détermination de la teneur au NH₃ est effectuée par un capteur et celui-ci déclenche une impulsion de commande lorsqu'est attente la valeur de seuil.

4. Procédé selon les revendications 1 à 3, caractérisé par le fait que l'impulsion de commande est déclenchée par le capteur sur la base d'une température différentielle dans le courant gazeux du catalyseur, les mesures de température correspondantes s'opérant avant et après une oxydation catalytique du NH₃ contenu dans le courant gazeux.

5. Procédé selon la revendication 4, caractérisé par le fait que les mesures de température et l'oxydation catalytique du NH₃ s'opèrent dans un courant de gaz partiel à l'extérieur du catalyseur.

6. Procédé selon l'une ou plusieurs des revendications précédentes 1 à 5, caractérisé par le fait que, pour la détermination de la teneur en NH₃, on utilise deux capteurs en parallèle, dont le premier fonctionne selon les revendications 3 à 5 et le second est soumis à du gaz d'échappement qui est prélevé de l'apport de NH₃.

7. Procédé selon la revendication 6, caractérisé par le fait que le second capteur est soumis à du gaz d'échappement qui est prélevé après apport suivant le NH₃ avant le catalyseur.
